## Europäisches Patentamt
## European Patent Office
## Office européen des brevets

(19)

(11) Publication number: **0 125 054**
**B1**

(12) **EUROPEAN PATENT SPECIFICATION**

(45) Date of publication of patent specification: **04.10.89**

(51) Int. Cl.⁴: **B 08 B 9/08, B 08 B 3/12**

(21) Application number: **84302561.0**

(22) Date of filing: **13.04.84**

(54) Improved method and apparatus for cleaning reusable containers.

(30) Priority: **22.04.83 GB 8311017**

(43) Date of publication of application:
**14.11.84 Bulletin 84/46**

(45) Publication of the grant of the patent:
**04.10.89 Bulletin 89/40**

(84) Designated Contracting States:
**AT BE DE FR GB IT NL**

(56) References cited:
**FR-A-1 578 413**
**FR-A-2 383 879**
**GB-A- 953 483**
**GB-A-1 124 933**
**GB-A-1 154 101**

(73) Proprietor: **MCG TECHNO PACK LIMITED**
**Commercial Road**
**Walsall West Midlands WS2 7NQ (GB)**

(72) Inventor: **Coombs, John Anthony**
**The Orchard 17 Short Lane Barton-under-Needwood**
**Near Burton-on-Trent Staffordshire (GB)**
Inventor: **Crick, Geoffrey Gordon**
**30 Calder Drive Walmley**
**Sutton Coldfield West Midlands (GB)**

(74) Representative: **Brooke-Smith, Fred et al**
**STEVENS, HEWLETT & PERKINS 5 Quality Court**
**Chancery Lane**
**London WC2A 1HZ (GB)**

Courier Press, Leamington Spa, England.

## Description

The present invention relates to an apparatus for cleaning containers, such as returnable bottle crates, which become soiled in service and other containers such as bottles which require cleansing before first use and/or re-use. Apparatus of this type thus is commonly used in a production line, which will be halted if the cleaning apparatus is out of operation for more than a short time. While in any bottling line there will be a buffer stock of both clean bottles and clean crates stationed in advance of the filling machinery space requirements and other economic factors make it impossible for such buffer stocks to be sufficiently large to keep the filling machinery in operation for more than a short duration.

It is already known to clean containers of the type mentioned above in a tank of detergent solution which is subjected to ultrasonic vibration. A system has already been described in GB—A—1588312 in which such containers are progressed successively into and through an ultrasonically-vibrated detergrent bath, the emerging containers being sprayed with detergent solution, drawn from the detergent bath, to remove residual dirt, which has been loosened by the ultrasonic vibration. The detergent liquid, which falls off the containers, is returned to the detergent bath and the containers themselves move forward to a rinsing stage, where they are sprayed with relatively clean rinse water from another source. The features of the pre-characterising part of the present independent claim are known from this document.

In the system described in GB—A—1588312 the level of solid particles in the detergent bath is controlled by drawing a stream of detergent liquor from the bath through a centrifugal separator and returning it to the bath. The separator requires at relatively short intervals, e.g. 2 hours, periodic shut-down for the removal of accumlated dirt from it. Although such shut-down may be of quite short duration, it is somewhat incovenient in that it requires the regular attention of an operator who might otherwise be employed on other duties.

In the system of GB—A—1588312 the detergent liquor supplied to the sprays is passed through relatively coarse, stationary screen filters for removal of the larger particles from the supplied liquor. However no attempt is made to remove finer particles, so that the sprayed containers go forwa d to the rinse stage with a surface film of detergent liquor, carrying the full content of fine particles of the liquor in the detergent bath. The solids content of the detergent film results in a carry-over of solids into the rinse water, and also some additional detergent liquor carry-over (additional to the carry-over which would occur with a relatively cleaner liquor supplied to the sprays), because the solids have some tendency to increase the thickness of the film.

With the objective of ameliorating these disadvantages we have devised a form of cleaning apparatus in which the containers are first passed through a detergent bath and, after emergence from such bath, are subjected to spraying by liquor drawn from the detergent bath, the liquor supplied to the spray being filtered by means of an auto-clean filter.

An auto-clean filter is a filter comprising an endless mesh band, which travels continuously through a filtering station and a cleaning station, at which deposited materials are cleaned off the filter band. By the use of such a filter system it is possible to hold down the solids content of the sprayed liquid to a very low value. The self-cleaning filter requires very little attention from the operator.

Because the portion of the filter band at the filter station is constantly replaced by a cleansed portion it is possible to employ a much finer filter element than would be possible if the filter element were stationary: with the envisaged use of the apparatus for cleansing reusable bottle crates a stationary filter element would become plugged with dirt particles very quickly if sufficiently fine to filter out normal soil particles (as distinguished from paper scraps, leaves etc.). However it is possible to obtain woven monofilament filter bands which will separate out particles down to 30 microns size, although for the present purpose it may not always be necessary to employ so fine a filter.

In addition to the operational advantages already indicated the use of the auto-clean filter also practically eliminates clogging of the spray nozzles and reduces wear in the pump or pumps, which supplies the detergent liquor to the spray nozzles.

The use of self-cleaning filters of this type in washing apparatus is already known. One example of such apparatus is disclosed in GB—A—1154101.

In the apparatus of GB—A—1154101 the filter band is provided with spaced transverse cleats which are engaged successively by a reciprocating pusher for moving the filter band forward by indexed steps. The upper run of the band performs the filtering action, the liquid to be filtered overflowing onto it from the main wash tank. The band hands loosely on guide rails supporting its upper run so that it can be lifted out very easily. However the construction of the filter is such that no suction could be applied to draw liquid through the filter and the drive system is clumsy, particularly in its requirement for transverse cleats secured to the belt. In the described apparatus it appears possible for liquor to overflow the filter belt and fall back into the collecting bank, so that it can be returned to the washing apparatus without effective filtration and consequent risk of spray nozzle blockage in the washing apparatus.

In a washing apparatus built into a production line, unscheduled down time must be kept to a minimum for reasons already explained. In consequence effective filtration at all times is required to avoid nozzle blockage. At the same time it is important that with a band-type filter very rapid replacement of the band may be achieved in the unlikely event of breakage of the filter band.

In the apparatus of the present invention the filtered liquid is drawn through the filter band into a suction box, from which it is pumped to the spray nozzles. This requires that the filter band be tensioned so that it is quickly drawn into engagement with the surface of the suction box around the openings through which the liquid will flow, thus avoiding by-passing of the filter band. Tensioning of the band is also necessary to permit the band to be driven by a conventional drive roller.

According to the invention there is provided an apparatus for cleansing heavily soiled objects such as reusable bottle crates, comprising a washing tank, conveyor means for transporting soiled objects through detergent liquid in the washing tank, sprayers positioned to spray detergent liquid drawn from said washing tank onto objects emerging from the detergent liquid in the tank characterised by an endless moving filter band which moves successively through a filter station and a cleaning station at which deposited materials are removed from the band, the filter band being mounted on a support frame which includes a suction box arranged in a supplementary tank to which liquid flows from the washing tank, said suction box being connected in use to the inlet side of a pump, said filter band extending across one or more openings in the suction box, and said frame being pivotally supported towards one end and arranged so that the filter band rests on a supporting surface spaced away from said one end further than said pivot support, whereby the pivot support and said supporting surface together support the frame and filter band and the weight of the frame tensions the filter band.

The pivot for the filter band support frame is preferably supported in open cups located on the walls of the supplementary tank, so that, after disconnection of the pipes to the washing spray bar at the band cleaning station and to the suction pump for the detergent spray bar, the frame and band can be lifted out as a single unit, whenever it is required to replace the filter band.

In the accompanying drawings:

Figure 1 is a plan view of a crate washer incorporating an auto-clean filter in accordance with the invention.

Figure 2 is a side view of the filter unit for the detergent liquor.

Figure 3 is a diagrammatic illustration of the rinse water system.

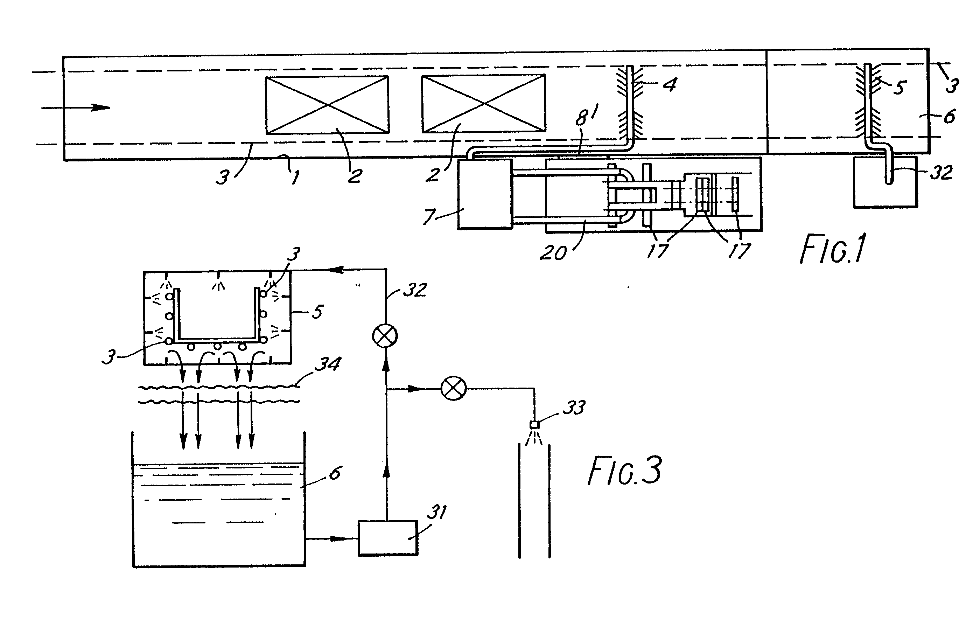

The crate washer illustrated in Figure 1 is constructed essentially as described in GB—A— 1588312. It comprises a detergent wash tank 1, in which are located ultrasonic transducer units 2. Crates (not shown) are progressed through detergent liquor in Figure 1 by means of a guide rail system 3, which first submerges them in the liquor in the region of the ultrasonic transducer units 2 and then guides them upwardly along an inclinded path so that they pass under a spray bar 4, when they are above the liquid level in the tank 1. The crates may be pushed through the wash tank 1, butted one against the other, as described in GB—A—1588312. Alternatively they may be progressed through the wash tank by a conventional travelling conveyor. The spray bar 4 sprays the crates with detergent liquor, which falls back into the tank 1. The crates then pass forward to a rinse section, where they pass under a rinsing water spray bar 5, arranged over a rinse water reservoir tank 6.

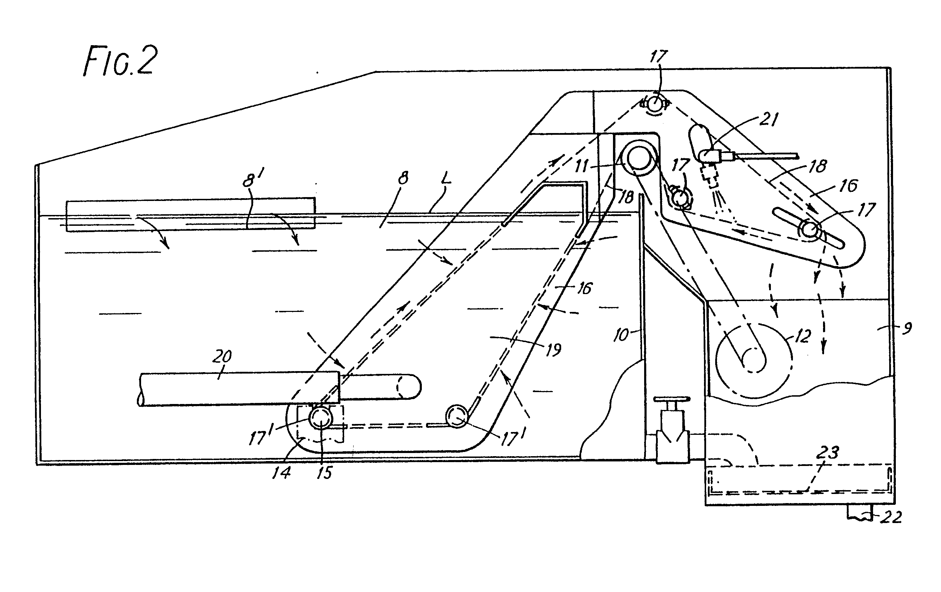

The spray bar 4 is supplied with detergent liquor by a pump 7, which draws detergent liquor from the liquor filtration system illustrated in Figure 2.

The filtration system comprises a supplementary side tank 8 into which liquor flows from tank 1 over a weir 8', or via a submerged conduit (or both) to maintain a substantially constant liquor level in tank 1. The tank 8 is separated from a wash water collection box 9 by a partition 10, but tank 8 and collection box 9 are otherwise integral with one another. A drive shaft 11 is mounted in bearings arranged in the side walls of the tank structure above the liqour level in the side tank 8 and is driven by a belt or chain from a drive motor 12. Support cups 14 are provided on the side walls of the tank 8 to receive a pivot shaft 15, which supports the band support frame 16. The support frame 16 carries guide rollers 17 and fixed support guides 17' for endless filter band 18 and also supports suction box 19, which comprises solid side plates and face plates, which are formed with windows at the areas indicated in chain lines in Figure 2. Liquor is drawn out from the suction box 19 into conduits 20 by means of the pump 7. The conduits lead out through the solid side plates of the suction box 19.

Detergent liquor can enter the suction box 19 at any point where apertures or windows are provided in the face plates. Provided that the filter band 18 is adequately tensioned it is held closely against the face plates of the suction box by the suction action of the pump 7, thus avoiding entry of solid particles around the side edges of the filter band 18. The forward run of the filter band can be considered as the part of the band extending around the suction box. It is a particular advantage of the present construction that during the later part of the forward run the outer surface of the filter band is following an upwardly inclined path where it is available to collect and carry away any semi-floating shreds of paper or the like. In some cases it is advantageous to continue the windowed area of the suction box at the end of the forward run to a level slightly above the liquid level L to draw surface-floating materials onto the band. In other cases it may be preferred to submerge the suction box completely in the liquor in tank 8. Material on the filter band is then carried to the band-cleaning section of the apparatus, where the reverse side of the band 18 is sprayed with wash water by means of a washing spray bar 21, to which wash water may be supplied direct from the mains supply or be pumped from the rinse water tank 6. In either case the wash water leaves the catch box 9 via outlet conduit 22 after passage through a coarse filter drawer 23, which strains out leaves, paper etc.

It will be particularly noted that in this construction the pivoted filter-band support frame 16 is shaped so that the filter band 18 rests on drive shaft 11. In consequence the band 18 is self-tightening and thus there is a fairly constant drive force applied to the belt by the drive shaft 11 and no adjustment is required to be made by the operator to compensate for belt wear or stretching or temperature change, particularly where a metal mesh filter band is employed. When the support frame 16 is lifted out of the tank 1, the band 18 is loose and thus very easy to replace.

The filter band employed in the present apparatus may be of any type having fine filtration apertures. The band should have adequate flexibility in the longitudinal direction and should preferably have a degree of transverse stiffness. Such characteristics are present in many commercially available materials available in the form of bands.

By employment of this apparatus there is some reduction of drag-over of both solid dirt and detergent solution into the rinsing stage of the apparatus. However the principle advantage is that the filtration system can operate substantially unattended, probably requiring removal of the filter drawer 23 about once per shift.

After leaving the washing section, the crates pass through a rinse water spray bar system 5 arranged over tank 6 as indicated in Figure 3. As will be seen a crate supported on guide rails 3 is sprayed from spray bar system 5 by water, drawn from reservoir tank 6 by pump 31. Part of the water passing upwards to spray bar 5 through conduit 32 is directed to a discharge jet 33, from which rinse water is discharged to waste at a controlled rate, for example 5 litres per minute. The discharged water is replaced from the mains supply by means of a ball valve (not shown) in tank 6.

The water dripping down from the crate under the spray bar 5 passes through a twin drawer filter system 34, arranged to catch any paper, leaves etc. which may have been carried over from tank 1 and finally dislodged by spray bar system 5.

This apparatus holds down the concentration of detergent in the recirculated rinse water.

The apparatus of the present invention may be modified in a number of ways without departing from the scope of the invention, as defined by the appended claims.

In one modified construction the support frame 16 may be pivoted at or near the location of the right hand idler roller 17 in place of at the pivot shaft 15.

In another modified construction the drive shaft 11 may be replaced by an idler roller or even by a stationary curved support surface. In place of drive by the shaft 11, the filter band 18 is driven by a powered roller, which is in the position of the right hand idler roller 17. The powered roller incorporates an internally mounted electric motor.

In all three alternatives the support frame 16 is pivoted at one end and is supported by a member which bears against the underside of the filter band 18 to tension the band. This allows the filter band to be mounted very loosely on the frame 16 for easy removal when the frame 16 is tilted about its pivot.

## Claims

1. An apparatus for cleansing heavily soiled objects such as reusable bottle crates, comprising a washing tank (1), conveyor means (3) for transporting soiled objects through detergent liquid in the washing tank, sprayers (4) positioned to spray detergent liquid drawn from said washing tank onto objects emerging from the detergent liquid in the tank (1), characterised by an endless moving filter band (18) which moves successively through a filter station and a cleaning station at which deposited materials are removed from the band, the filter band (18) being mounted on a support frame (16) which includes a suction box (19) arranged in a supplementary tank (8) to which liquid flows from the washing tank (1), said suction box (19) being connected in use to the inlet side of a pump (7), said filter band (18) extending across one or more openings in the suction box (19), and said frame (16) being pivotally supported adjacent one end and arranged so that the filter band (18) rests on a supporting surface spaced away from said one end further than said pivot support, whereby the pivot support and said supporting surface together support the frame and filter band and the weight of the frame (16) tensions the filter band (18).

2. An apparatus according to Claim 1 further characterised in that one or more ultrasonic transducer(s) (2) are arranged in said washing tank (1) for energising the detergent bath liquid.

3. An apparatus according to Claim 1 or 2 further characterised in that the filter band (18) is mounted on support rollers (17, 17'), mounted on the pivoted support frame (16) and is engaged for drive by a drive roll (11) which provides said supporting surface, the lower run of said filter band (18) resting on said surface.

4. An apparatus according to Claim 3 further characterised in that the support frame (16) is provided with a pivot shaft (15) resting in open cup members (14) on the side walls of the supplementary tank (8) whereby the frame (16) and filter band (18) may be lifted out as a unit from the supplementary tank (8).

## Patentansprüche

1. Vorrichtung zum Reinigen von stark verschmutzten Objekten, wie wiederverwendbare Flaschenkisten, bestehend aus einem Waschkasten (1), einer Fördereinrichtung (3) zum Befördern der verschmutzten Objekte durch die Reinigungsflüssigkeit im Waschkasten, Sprühern (4) zum Sprühen von Reinigungsflüssigkeit aus genanntem Waschkasten auf die aus der Reinigungsflüssigkeit im Kasten (1) herauskommenden Objekte, gekennzeichnet durch ein endlos laufendes Filterband (18), das nacheinander durch eine Filterstation und eine Reinigungsstation geführt wird, wo abgelagertes Material vom Filterband entfernt wird, wobei das Filterband (18) auf einem Tragrahmen (16) angebracht ist, der einen Saugkasten (19) umfaßt, welcher in einem Zusatzkasten (8) angeordnet ist, in den Flüssigkeit aus dem Waschkasten (1) geleitet wird, wobei der Saugkasten (19) bei Gebrauch an die Saugseite einer Pumpe (7) angeschlossen ist, das Filterband (18) an einer oder mehreren Öffnungen im Saugkasten vorbeigeführt wird und der Tragrahmen (16) an einem Ende drehbar gelagert und derart angeordnet ist, daß das Filterband (18) auf einer Auflagefläche aufliegt, deren Abstand zum genannten einen Ende größer ist als zur Zapfenwelle, wobei der Tragrahmen und das Filterband durch die Zapfenwelle und die Auflagefläche getragen werden und das Filterband (18) durch das Gewicht des Rahmens (16) gespannt wird.

2. Vorrichtung nach Anspruch 1, dadurch gekennzeichnet; daß im Waschkasten (1) ein oder mehrere Ultraschall-Energiewandler (2) zur Erregung der Reinigungsbadflüssigkeit angeordnet sind.

3. Vorrichtung nach Anspruch 1 oder 2, dadurch gekennzeichnet, daß das Filterband (18) über Tragrollen (17, 17') läuft, die an dem drehbaren Tragrahmen (16) angebracht sind, und mittels einer Antriebsrolle (11) angetrieben wird, die die Auflagefläche bildet, wobei der untere Abschnitt des Filterbandes (18) auf der genannten Fläche aufliegt.

4. Vorrichtung nach Anspruch 3, dadurch gekennzeichnet, daß der Tragrahmen (16) mit einer Zapfenwelle (15) versehen ist, die in offenen Schalenelementen (14) an den Seitenwänden des Zusatzkastens (8) gelagert ist, wobei der Tragrahmen (16) und das Filterband (18) als Einheit aus dem Zusatzkasten (8) herausgehoben werden können.

**Revendications**

1. Appareil pour nettoyer des objets très souillés, tels que des caisses à bouteilles réutilisables, comportant un bac de lavage (1), des moyens transporteurs (3) pour acheminer les objets souillés à travers un liquide détergent contenu dans le bac de lavage, des pulvérisateurs (4) positionnés pour pulvériser du liquide détergent soutiré dudit bac de lavage sur les objets qui sortent du liquide détergent contenu dans le bac (1), caractérisé par une bande filtrante sans fin (18) mobile qui traverse successivement un poste de filtrage et un poste de nettoyage au niveau duquel les matières déposées sont éliminées de la bande, la bande filtrante (18) étant montée sur un bâti de support (16) qui comprend une boîte aspirante (19) disposée dans un bac supplémentaire (8) en direction duquel s'écoule du liquide provenant du bac de lavage (1), tandis que ladite boîte aspirante (19) est, en service, raccordée au côté d'aspiration d'une pompe (7), et la bande filtrante (18) s'étendant transversalement à au moins un orifice ménagé dans la boîte apsirante (19), tandis que ledit bâti (16) est supporté d'une manière pivotante à proximité de l'une de ses extrémités et est conçu de telle façon que la bande filtrante (18) repose sur une surface d'appui espacée de ladite extrémité d'une plus grande distance que ledit support de pivotement, moyennant quoi, le support de pivotement et ladite surface d'appui supportent conjointement le bâti et la bande filtrante, la bande filtrante (18) étant tendue par le poids du bâti (16).

2. Appareil selon la revendication 1, également caractérisé en ce qu'il est prévu au moins un transducteur à ultrasons (2) disposé dans ledit bac de lavage (1) pour activer le liquide de bain détergent.

3. Appareil selon la revendication 1 ou 2, également caractérisé en ce que la bande filtrante (18) est montée sur des rouleaux de support (17, 17') montés sur le bâti de support pivotant (16) et est mise en prise pour être entraînée par un cylindre d'entraînement (11) qui définit ladite surface d'appui, le brin inférieur de ladite bande filtrante (18) reposant sur ladite surface.

4. Appareil selon la revendication 3, également caractérisé en ce que le bâti de support (16) est pourvu d'un axe de pivotement (15) en appui dans des organes formant coupelles ouverts (14) prévus sur les parois latérales du bac supplémentaire (8), moyennant quoi, le bâti (16) et la bande filtrante (18) peuvent être soulevés d'un seul bloc hors du bac supplémentaire (8).

EP 0 125 054 B1

FIG.1

FIG.3

1

Fig.2